# EUROPÄISCHE PATENTANMELDUNG

(11) **EP 2 746 408 A1**
(43) Veröffentlichungstag der Anmeldung: **25.06.2014**
(21) Anmeldenummer: 12198903.2
(22) Anmeldetag: 21.12.2012
(51) Int. Cl.: C21B 5/06, C21B 13/14

(54) **Überhitzung von einem in einem Reduktionsprozess genutzten Exportgas zum Ausgleich von Mengenschwankungen und Vorrichtung zum dessen**

(71) Anmelder: Siemens VAI Metals Technologies GmbH, 4031 Linz (AT)
(72) Erfinder: Millner, Robert, 3382 Loosdorf (AT); Rosenfellner, Gerald, 3352 Ertl (AT)
(74) Vertreter: Maier, Daniel Oliver

(57) **Zusammenfassung**

Die Erfindung betrifft ein Verfahren und eine Vorrichtung zum Ausgleich von Mengenschwankungen bei gleichzeitiger Erhöhung der Temperatur eines in einem Reduktionsprozess (1) genutzten Exportgases (2), bei dem eine Kühlung einer ersten Teilmenge (3) eines Recyclegases (4) in zumindest einem Recyclegaskühler (5) zu einem cold-Recyclegas (6) erfolgt und bei dem dem Exportgas (2) das cold-Recyclegas (6) druckgeregelt und/oder mengengeregelt zugeführt wird, um Mengenschwankungen des Exportgases (2) auszugleichen und bei dem Exportgas (2) druckgeregelt und/oder mengengeregelt eine zweite Teilmenge des Recyclegases (4) als hot-Recyclegas (7) mit einer höheren Temperatur als das cold-Recyclegas (6) zugeführt wird, wonach eine das cold-Recyclegas (6) und das hot-Recyclegas (7) umfassende Exportgasmischung (8) in den Reduktionsprozess (1) eingebracht wird und wobei die Temperatur der Exportgasmischung (8) höher ist als die Temperatur des Exportgases (2).

Dadurch wird die Temperatur des Exportgases (2) beziehungsweise der Exportgasmischung (8) derart eingestellt, dass sie höher ist als ihr Taupunkt beziehungsweise ihre Taupunkttemperatur.

## Beschreibung

### Technisches Gebiet

Die Erfindung betrifft ein Verfahren zum Ausgleich von Mengenschwankungen bei gleichzeitiger Erhöhung der Temperatur eines in einem Reduktionsprozess genutzten Exportgases. Dabei erfolgt eine Kühlung einer ersten Teilmenge eines Recyclegases in zumindest einem Recyclegaskühler zu einem cold-Recyclegas. Das cold-Recyclegas wird dem Exportgas druckgeregelt und/oder mengengeregelt zugeführt, um Mengenschwankungen des Exportgases auszugleichen.

Ein weiterer Gegenstand der Erfindung ist eine Vorrichtung zur Durchführung des erfindungsgemäßen Verfahrens.

### Stand der Technik

Aus dem Stand der Technik ist bekannt, ein Exportgas in einem Reduktionsprozess zu nutzen. Das Exportgas stammt dabei aus einer externen Gasquelle, wie beispielsweise aus einer Anlage zur Roheisenherstellung und/oder aus einer Kohlevergasungsanlage und/oder aus einer Kokerei. Der Reduktionsprozess umfasst dabei auch eine Aufbereitung des Exportgases zu einem Reduktionsgas, beispielsweise eine Verdichtung des Exportgases in einem Exportgasverdichter und eine Eliminierung des CO₂ aus dem verdichteten Exportgases, bevor das Reduktionsgas einem Reduktionsaggregat zur Reduktion von Metalloxiden zugeführt wird.

Das Exportgas ist häufig Mengenschwankungen unterworfen. Dadurch kann es zu nachteiligen Betriebszuständen im Reduktionsprozess kommen, welche durch aus dem Stand der Technik bekannte Maßnahmen, wie beispielsweise die Zufuhr einer die Mengenschwankungen ausgleichenden variablen Menge eines Gasstromes zum Exportgas, gelöst werden.

Nachteilig dabei ist, dass das Exportgas oftmals eine Temperatur aufweist, welche am Taupunkt oder nur knapp über dem Taupunkt des Exportgases liegt. Wird ein derartiges Exportgas beispielsweise in den Exportgasverdichter eingebracht, so besteht die Gefahr, dass es speziell an Eintrittsleitapparaten und Laufrädern des Exportgasverdichters durch Taupunktunterschreitung des Exportgases zu Nass/Trockenübergängen beziehungsweise durch Kondensation/Sublimation von polyaromatischen Kohlenwasserstoffen im Exportgas zu Anpackungen an den Eintrittsleitapparaten und Laufrädern des Exportgasverdichters kommen kann.

Ebenso können gegebenenfalls vorhandene Wärmetauscher, in die ein derartiges Exportgas eingebracht wird, von solchen Anpackungen betroffen sein.

### Zusammenfassung der Erfindung

### Technische Aufgabe

Es ist die Aufgabe der vorliegenden Erfindung, ein Verfahren und eine Vorrichtung bereitzustellen, mit denen die aus dem Stand der Technik bekannten Nachteile überwunden werden.

### Technische Lösung

Diese Aufgabe wird durch ein Verfahren zum Ausgleich von Mengenschwankungen bei gleichzeitiger Erhöhung der Temperatur eines in einem Reduktionsprozess genutzten Exportgases gelöst, wobei das Verfahren folgende Verfahrensschritte umfasst:
● Kühlung einer ersten Teilmenge eines Recyclegases in zumindest einem Recyclegaskühler zu einem cold-Recyclegas,
● druckgeregelte und/oder mengengeregelte Zufuhr des cold-Recyclegases zum Exportgas, um Mengenschwankungen des Exportgases (31) auszugleichen, und wobei dem Exportgas erfindungsgemäß druckgeregelt und/oder mengengeregelt eine zweite Teilmenge des Recyclegases als hot-Recyclegas mit einer höheren Temperatur als das cold-Recyclegas zugeführt wird, wonach eine das cold-Recyclegas und das hot-Recyclegas umfassende Exportgasmischung in den Reduktionsprozess eingebracht wird, und wobei die Temperatur der Exportgasmischung höher ist als die Temperatur des Exportgases.

Unter Exportgas ist ein Gas zu verstehen, welches aus einer externen Gasquelle stammt. Eine externe Gasquelle ist beispielsweise eine Anlage zur Roheisenherstellung und/oder eine Kohlevergasungsanlage und/oder eine Kokerei. Das Exportgas kann beispielsweise auch Tiegelgas oder auch Gichtgas aus dem Gasnetz eines Stahlwerks beziehungsweise Hüttenwerks umfassen.

Das Verfahren umfasst die Kühlung der ersten Teilmenge des Recyclegases im Recyclegaskühler. Das gekühlte Recyclegas wird im Folgenden mit cold-Recyclegas bezeichnet. Das cold-Recyclegas wird druckgeregelt und/oder mengengeregelt dem Exportgas zugeführt, um die Mengenschwankungen des Exportgases auszugleichen. Diese druckgeregelte und/oder mengengeregelte Zufuhr erfolgt beispielsweise mittels eines Recyclegasverdichters. Erfindungsgemäß wird dem Exportgas die zweite Teilmenge des Recyclegases mit einer höheren Temperatur als das cold-Recyclegas druckgeregelt und/oder mengengeregelt zugeführt. Diese zweite Teilmenge des Recyclegases wird aus Gründen der besseren Unterscheidbarkeit im Folgenden mit hot-Recyclegas bezeichnet. Das cold-Recyclegas und das hot-Recyclegas entsprechen jeweils unterschiedlichen Teilmengen desselben Recyclegases. Dem Exportgas werden das cold-Recyclegas und das hot-Recyclegas zugeführt, wobei die Reihenfolge der Zuführung dieser beiden Gase zum Exportgas beliebig ist. Es kann dem Exportgas zuerst das hot-Recyclegas und danach das cold-Recyclegas oder zuerst das cold-Recyclegas und danach das hot-Recyclegas zugeführt werden. Bei der ersten Variante enthält das Exportgas vor Zufuhr des cold-Recyclegases bereits das hot-Recyclegas, bei der zweiten Variante enthält das Exportgas vor Zufuhr des hot-Recyclegases bereits das cold-Recyclegas.

Die Erfindung umfasst auch die Zufuhr des cold-Recyclegases und des hot-Recyclegases zum Exportgas als Mischung bestehend aus dem cold-Recyclegas und dem hot-Recyclegas. Es wird dabei zuerst das hot-Recyclegas mit dem cold-Recyclegas gemischt und danach wird dem Exportgas die Mischung zugeführt. Das Exportgas enthält nach Zufuhr der Mischung sowohl das cold-Recyclegas als auch das hot-Recyclegas.

Die Zuführung des hot-Recyclegases und des cold-Recyclegases als Mischung zum Exportgas hat den Vorteil, dass nur eine einzige Leitung zur Zufuhr der Mischung zum Exportgas notwendig ist, wodurch eine sehr kompakte Bauweise möglich ist.

Das Exportgas enthält zumindest eine der folgenden Gaskomponenten: Kohlenmonoxid - CO, Kohlendioxid CO₂, Wasserstoff - H₂, Stickstoff - N₂, Methan - CH₄, Wasserdampf - H₂O. Das Recyclegas enthält zumindest eine der folgenden Gaskomponenten: Kohlenmonoxid - CO, Kohlendioxid CO₂, Wasserstoff - H₂, Stickstoff - N₂, Methan CH₄, Wasserdampf und kann aus einer beliebigen Gasquelle stammen.

Unter Reduktionsprozess ist in diesem Zusammenhang nicht nur eine Reduktion von Metalloxiden mittels eines Reduktionsgases in einem Reduktionsaggregat zu verstehen, sondern auch sämtliche für eine Aufbereitung der Exportgasmischung zu dem Reduktionsgas erforderlichen Verfahrensschritte.

Das das cold-Recyclegas und das hot-Recyclegas umfassende Exportgas wird im Folgenden mit Exportgasmischung bezeichnet, welche in den Reduktionsprozess eingebracht wird. Die Temperatur des hot-Recyclegases ist höher als die Temperatur des Exportgases vor der Zufuhr des hot-Recyclegases und des cold-Recyclegases zum Exportgas. Außerdem ist die Temperatur des hot-Recyclegases höher als die Temperatur des cold-Recyclegases.

Dadurch wird erreicht, dass die Temperatur der Exportgasmischung höher ist, als die Temperatur des Exportgases vor der Zufuhr des cold-Recyclegases und des hot-Recyclegases.

Durch die Zufuhr des hot-Recyclegases zum Exportgas wird die fühlbare Energie des hot-Recyclegases zur Temperaturerhöhung des Exportgases genutzt. Dadurch wird die Temperatur des Exportgases beziehungsweise der Exportgasmischung derart eingestellt, dass sie höher ist als ihr Taupunkt beziehungsweise ihre Taupunkttemperatur. Diesen Vorgang nennt man Überhitzung des Exportgases beziehungsweise der Exportgasmischung. Eine vorteilhafte Wirkung dieser Überhitzung besteht darin, dass es nicht durch Taupunktunterschreitung der Exportgasmischung zu Nass/Trockenübergängen durch Kondensation/Verdampfung von Wasser bzw. Kondensation/Sublimation von polyaromatischen Kohlenwasserstoffen im Zusammenhang mit Staubpartikeln, welche gegebenenfalls im Exportgas beziehungsweise in der Exportgasmischung und/oder im Recyclegas vorhanden sind, zu Anpackungen an Eintrittsleitapparaten und/oder Laufrädern des Exportgasverdichters kommen kann. Zusätzlich wird durch die erfindungsgemäßen Maßnahmen die Gefahr von Spannungsrisskorrosionen an den Laufrädern des Exportgasverdichters minimiert.

Vorzugsweise weist das cold-Recyclegas im Wesentlichen die gleiche Temperatur wie das Exportgas auf.

Unter dem Ausdruck im Wesentlichen gleiche Temperatur ist zu verstehen, dass sich die Temperaturen des cold-Recyclegases und des Exportgases um nicht mehr als 40°C , vorzugsweise um nicht mehr als 20°C, noch bevorzugter um nicht mehr als 10°C unterscheiden.

In einer bevorzugten Ausführungsform des erfindungsgemäßen Verfahrens wird ein aus der Exportgasmischung gewonnenes Reduktionsgas in ein Reduktionsaggregat zur Reduktion von Metalloxiden eingebracht wonach das Reduktionsgas nach zumindest teilweiser Reduktion der Metalloxide als Topgas aus dem Reduktionsaggregat abgezogen wird und wobei die Gewinnung des Reduktionsgases die Verfahrensschritte
● Verdichtung der Exportgasmischung in zumindest einem Exportgasverdichter zu einem Prozessgas,
● gegebenenfalls Kühlung des Prozessgases in einem Prozessgaskühler und Eliminierung von CO₂ und/oder H₂O aus dem Prozessgas in einer CO₂-Eliminierungsvorrichtung unter Gewinnung des Reduktionsgases und
● Aufheizung des Reduktionsgases in einer Reduktionsgasheizvorrichtung
umfasst und wobei eine vorzugsweise von Staub befreite und/oder vorzugsweise gekühlte erste Teilmenge des Topgases, gegebenenfalls nach einer Verdichtung, als das Recyclegas verwendet wird.

Die Eliminierung von CO₂ aus dem Prozessgas umfasst beispielsweise die Entfernung von CO₂ aus dem Prozessgas oder die Umwandlung von CO₂ zu CO, beispielsweise mittels eines aus dem Stand der Technik bekannten Reformers.

Das Reduktionsaggregat ist beispielsweise ein Hochofen oder ein Direktreduktionsaggregat, welches auf Basis Festbett, Wirbelschicht oder Bewegtbett ausgebildet ist. Selbstverständlich können auch mehrere Reduktionsaggregate vorhanden sein, in die das Reduktionsgas eingebracht wird.

Unter Reduktionsgas ist ein Gas zu verstehen, das geeignet ist, Metalloxide, speziell Eisenerze beziehungsweise Eisenoxide, zumindest teilweise zu Metallen, speziell Eisen, zu reduzieren, beispielsweise ein Gas mit Kohlenmonoxid und/oder Wasserstoff als Hauptbestandteil.

Die im Reduktionsaggregat mittels des Reduktionsgases reduzierten Metalloxide werden als DRI beziehungsweise direct reduced iron bezeichnet. Ist das Reduktionsaggregat als Wirbelschichtreaktor ausgebildet, wird das DRI anschließend beispielsweise zu HBI (hot briquetted iron) brikettiert, um anschließend in einem Eisen- oder Stahlerzeugungsprozess weiterverwendet werden zu können.

Nach der Reduktion der Metalloxide mittels des Reduktionsgases wird das dabei zumindest teilweise umgewandelte Reduktionsgas als Topgas vom Reduktionsaggregat abgezogen. Die erste Teilmenge des vorzugsweise in einer Einrichtung zur Entstaubung und/oder Kühlung von Staub befreite und/oder gekühlte Topgases wird, gegebenenfalls nach der Verdichtung, als das Recyclegas verwendet.

Die Exportgasmischung wird im Exportgasverdichter zu dem Prozessgas verdichtet. Die Eliminierung des CO₂ aus dem Prozessgas erfolgt vorzugsweise mittels Druckwechseladsorption oder Vakuumdruckwechseladsorption. Durch Eliminierung des CO₂ aus dem Prozessgas erhält man das Reduktionsgas, welches vor seinem Einbringen in das Reduktionsaggregat in der Reduktionsgasheizvorrichtung auf eine zur Durchführung der Reduktion der Metalloxide geeignete Temperatur von 700 bis 1200°C aufgeheizt wird.

Die von Staub befreite und/oder gekühlte erste Teilmenge des Topgases wird, gegebenenfalls nach der Verdichtung, als das Recyclegas verwendet. Die erste Teilmenge des Recyclegases wird im Recyclegaskühler zu dem cold-Recyclegas gekühlt und anschließend dem Exportgas zugeführt. Die zweite Teilmenge des Recyclegases wird dem Exportgas als hot-Recyclegas zugeführt.

Der Vorteil, der sich durch diese Ausführungsform des erfindungsgemäßen Verfahrens ergibt, ist der, dass die im Recyclegas enthaltene Wärmeenergie - die sogenannte fühlbare Wärme - zur Erhöhung der Temperatur des Exportgases genutzt wird. Es ist daher nicht notwendig, das hot-Recyclegas vor seiner Zufuhr zum Exportgas einer weiteren Aufheizung zu unterziehen.

In einer anderen Ausführungsform des erfindungsgemäßen Verfahrens beträgt die Untergrenze der Temperatur des hot-Recyclegases zwischen 80°C, vorzugsweise 100°C und die Obergrenze der Temperatur des hot-Recyclegases 180°C, vorzugsweise 150°C.

Liegt die Temperatur des hot-Recyclegases im angegebenen Temperaturbereich, so ist bei entsprechendem hot-Recyclegasfluss sichergestellt, dass die Temperatur der Exportgasmischung die Taupunkttemperatur nicht unterschreitet.

In einer weiteren Ausführungsform des erfindungsgemäßen Verfahrens umfasst das Exportgas Tiegelgas aus dem Gasnetz eines Stahlwerks und/oder es stammt aus einer Anlage zur Roheisenherstellung und/oder aus einer Kohlevergasungsanlage und/oder aus einer Kokerei.

Eine Anlage zur Roheisenherstellung ist beispielsweise eine aus dem Stand der Technik bekannte COREX^{®} - Anlage, eine FINEX^{®} - Anlage oder ein Sauerstoffhochofen. Das Exportgas kann daher auch Gichtgas des Sauerstoffhochofens enthalten oder aus ihm bestehen. Stammt das Exportgas aus einer Kohlevergasungsanlage, so kann es sinnvoll sein, die im Exportgas enthaltene Druckenergie in einer Entspannungsturbine zu nutzen. Der bei der Nutzung der Druckenergie in der Entspannungsturbine auftretende Joule - Thompson Effekt führt zu einer Abkühlung des Exportgases. Die erfindungsgemäße Zufuhr des hot-Recyclegases zum Exportgas gleicht die Abkühlung des Exportgases wieder aus und stellt eine ausreichend hohe Überhitzung des Exportgases sicher.

In einer bevorzugten Ausführungsform des erfindungsgemäßen Verfahrens wird das Exportgas vor Nutzung im Reduktionsprozess einer Entstaubung und/oder Gasreinigung in einer Vorrichtung zur Entstaubung und/oder Gasreinigung unterzogen, wobei dem Exportgas das hot-Recyclegas und das cold-Recyclegas vor der Entstaubung und/oder Gasreinigung zugeführt wird.

In der Vorrichtung zur Entstaubung und/oder Gasreinigung erfolgt eine Abscheidung von mit der Exportgasmischung mittransportierten Staubpartikeln beziehungsweise Feststoffpartikeln.

Die Entstaubung des Exportgases stellt sicher, dass nachfolgende Komponenten vor einem erhöhten Verschleiß beziehungsweise vor einer Beschädigung durch mit dem Exportgas mittransportierte Staubpartikel beziehungsweise Feststoffpartikel geschützt werden.

Durch die Zufuhr des hot-Recyclegases und des cold-Recyclegases zum Exportgas vor der Entstaubung und/oder Gasreinigung tritt das hot-Recyclegas umfassende Exportgas bereits in einem Überhitzten Zustand in die Vorrichtung zur Entstaubung und/oder Gasreinigung ein. Dadurch wird vermieden, dass es in dieser Vorrichtung zu einem feuchten Betrieb oder zu Naß/Trockenübergängen beziehungsweise durch Kondensation/Sublimation von polyaromatischen Kohlenwasserstoffen, welche gegebenenfalls im Exportgas vorhanden sind, zu Anpackungen in dieser Vorrichtung kommt.

Im Falle der Zufuhr des cold-Recyclegases und des hot-Recyclegases als Mischung zum Exportgas erfolgt die Zufuhr der Mischung vor der Entstaubung und/oder Gasreinigung des Exportgases.

Eine bevorzugte Ausführungsform des erfindungsgemäßen Verfahrens ist dadurch gekennzeichnet, dass die Temperatur der Exportgasmischung maximal um 50°C, vorzugsweise zwischen 2°C und 15°C, höher ist als die Temperatur des Exportgases vor der Zufuhr des cold-Recyclegases und des hot-Recyclegases. Damit wird erreicht, dass die Exportgasmischung vor seiner Verdichtung im Exportgasverdichter durch die Zufuhr des hot-Recyclegases so weit überhitzt wird, dass ein genügend hoher Sicherheitsabstand zum Taupunkt der Exportgasmischung besteht.

In einer besonders bevorzugten Ausführungsform des erfindungsgemäßen Verfahrens wird die Temperatur der Exportgasmischung durch die Menge des der Exportgasmischung zugeführten hot-Recyclegases auf einen bestimmten Wert geregelt.

Vorzugsweise erfolgt die Regelung der Temperatur der Exportgasmischung derart, dass sie im Wesentlichen um einen konstanten Wert über der Taupunkttemperatur der Exportgasmischung liegt. Damit wird in jedem Betriebszustand des erfindungsgemäßen Verfahrens eine konstante Taupunktüberschreitung der Exportgasmischung sichergestellt.

Ein weiterer Gegenstand der Erfindung ist eine Vorrichtung zur Durchführung des erfindungsgemäßen Verfahrens umfassend
● eine Exportgasleitung zum Einbringen einer Exportgasmischung in einen Reduktionsprozess,
● eine Recyclegasleitung mit einer in der Recyclegasleitung vorzugsweise als Recyclegasverdichter ausgebildeten ersten Druckregelvorrichtung und/oder ersten Mengenregelvorrichtung,
● eine aus der Recyclegasleitung entspringende cold-Recyclegasleitung mit einem in der cold-Recyclegasleitung angeordneten Recyclegaskühler,
wobei
eine aus der Recyclegasleitung entspringende hot-Recyclegasleitung mit einer in der hot-Recyclegasleitung angeordneten zweiten Druckregelvorrichtung und/oder zweiten Mengenregelvorrichtung vorhanden ist und wobei die cold-Recyclegasleitung und die hot-Recyclegasleitung in die Exportgasleitung münden oder die cold-Recyclegasleitung und die hot-Recyclegasleitung in eine Rückführleitung zusammengeführt werden, welche in die Exportgasleitung mündet.

Mittels der Exportgasleitung wird das Exportgas beziehungsweise die Exportgasmischung in den Reduktionsprozess eingebracht. Der Reduktionsprozess umfasst dabei beispielsweise die Aufbereitung der Exportgasmischung zum Reduktionsgas, welches nachfolgend dem Reduktionsaggregat zur Reduktion der Metalloxide zugeführt wird. In der Recyclegasleitung ist vorzugsweise ein Recyclegasverdichter angeordnet. Nach dem Recyclegasverdichter entspringen aus der Recyclegasleitung die cold-Recyclegasleitung und die hot-Recyclegasleitung, welche beide in die Exportgasleitung oder in die Rückführleitung münden. Im Falle des Vorhandenseins der Rückführleitung mündet diese in die Exportgasleitung. In der cold-Recyclegasleitung ist ein Recyclegaskühler angeordnet. In der hot-Recyclegasleitung sind die zweite Druckregelvorrichtung und/oder die zweite Mengenregelvorrichtung angeordnet, welche vorzugsweise als positionsgeregelte Ventile, insbesondere als hand indicator control oder Stellungsregelventile mit Stellungsrückmeldung - ausgebildet sind. Ein solches Ventil kann auch in der cold-Recyclegasleitung angeordnet sein.

Auf Grund der erfindungsgemäßen Vorrichtungsmerkmale ist es möglich, das Exportgas durch Zufuhr des hot-Recyclegases zu überhitzen. Diese Überhitzung bewirkt, dass es nicht durch Taupunktunterschreitung des das hot-Recyclegas umfassenden Exportgases beziehungsweise der Exportgasmischung zu einer Wassertröpfchenbildung und damit im Zusammenhang mit Staubpartikel, welche sich im Exportgas befinden, zu Anpackungen beispielsweise an den im Reduktionsprozess vorhandenen Eintrittsleitapparaten und Laufrädern des Exportgasverdichters, bedingt durch Naß-/Trockenübergänge beziehungsweise durch Kondensation/Sublimation der polyaromatischen Kohlenwasserstoffen, welche gegebenenfalls im Exportgas vorhanden sind, kommen kann.

Zusätzlich wird durch die erfindungsgemäßen Maßnahmen die Gefahr von Spannungsrisskorrosionen an den Laufrädern des Exportgasverdichters minimiert.

Eine bevorzugte Ausführungsform der erfindungsgemäßen Vorrichtung ist dadurch gekennzeichnet, dass sie weiter umfasst:
● eine in ein Reduktionsaggregat mündende Reduktionsgasleitung zur Zufuhr von Reduktionsgas in das Reduktionsaggregat,
● eine aus dem Reduktionsaggregat entspringende Topgasleitung mit einer in der Topgasleitung angeordneten Einrichtung zur Entstaubung und/oder Kühlung von Topgas, wobei die Recyclegasleitung nach der Einrichtung zur Entstaubung und/oder Kühlung von der Topgasleitung abzweigt, und wobei die cold-Recyclegasleitung und die hot-Recyclegasleitung nach der ersten Druckregelvorrichtung und/oder der ersten Mengenregelvorrichtung aus der Recyclegasleitung entspringen,
● zumindest einen in der Exportgasleitung angeordneten Exportgasverdichter,
● eine dem Exportgasverdichter nachgeordnete CO₂-Eliminierungsvorrichtung und
● eine der CO₂-Eliminierungsvorrichtung nachgeordnete Reduktionsgasheizvorrichtung.

In das Reduktionsaggregat mündet die Reduktionsgasleitung, mittels der das Reduktionsgas in das Reduktionsaggregat eingebracht wird. Das im Reduktionsaggregat bei der Reduktion der Metalloxide zumindest teilweise verbrauchte Reduktionsgas wird über die Topgasleitung aus dem Reduktionsaggregat abgezogen. In der Topgasleitung ist eine Einrichtung zur Entstaubung und/oder Kühlung des Topgases angeordnet. Von der Topgasleitung, nach der Einrichtung zur Entstaubung und/oder Kühlung des Topgases, zweigt die Recyclegasleitung ab. In der Recyclegasleitung ist vorzugsweise der Recyclegasverdichter angeordnet. Die erste Teilmenge des Topgases wird dem Recyclegasverdichter mittels der Recyclegasleitung zugeführt.

Weiter umfasst die Vorrichtung die Exportgasleitung in dem der zumindest eine Exportgasverdichter angeordnet ist. Im Exportgasverdichter wird die Exportgasmischung zu dem Prozessgas verdichtet. In der Exportgasleitung angeordnet und dem Exportgasverdichter nachgeordnet ist CO₂-Eliminierungsvorrichtung die CO₂-Eliminierungsvorrichtung zur Eliminierung des CO₂ aus dem Prozessgas unter Gewinnung des Reduktionsgases. Die CO₂-Eliminierungsvorrichtung ist vorzugsweise eine PSA oder VPSA - Anlage. Nach der CO₂-Eliminierungsvorrichtung ist die Reduktionsgasheizvorrichtung zur Aufheizung des Reduktionsgases angeordnet. Gegebenenfalls befindet sich in der Exportgasleitung, zwischen dem Exportgasverdichter und der Reduktionsgasheizvorrichtung, ein Prozessgaskühler.

Der Vorteil, der sich durch diese Ausführungsform der erfindungsgemäßen Vorrichtung ergibt ist der, dass die im Recyclegas enthaltene Wärmeenergie - die sogenannte fühlbare Wärme - zur Erhöhung der Temperatur des Exportgases genutzt werden kann. Es ist daher nicht notwendig, das hot-Recyclegas vor seiner Zufuhr zum Exportgas einer weiteren Aufheizung zu unterziehen.

In einer weiteren Ausführungsform der erfindungsgemäßen Vorrichtung entspringt die Exportgasleitung einem Gasnetz eines Stahlwerks und/oder aus einer Anlage zur Roheisenherstellung und/oder aus einer Kohlevergasungsanlage und/oder aus einer Kokerei.

Eine Anlage zur Roheisenherstellung ist beispielsweise eine aus dem Stand der Technik bekannte COREX^{®} - Anlage, eine FINEX^{®} - Anlage oder ein Sauerstoffhochofen.

Eine Ausführungsform der erfindungsgemäßen Vorrichtung ist derart ausgebildet, dass in der Exportgasleitung eine Vorrichtung zur Entstaubung und/oder Gasreinigung angeordnet ist, wobei die hot-Recyclegasleitung und die cold-Recyclegasleitung oder die Rückführleitung vor der Vorrichtung zur Entstaubung und/oder Gasreinigung in die Exportgasleitung münden.

Die Vorrichtung zur Entstaubung und/oder Gasreinigung ist vorzugsweise eine Trockenentstaubungsvorrichtung auf Basis von Filterschläuchen oder Filterkerzen.

Die hot-Recyclegasleitung und die cold-Recyclegasleitung münden vor der Vorrichtung zur Entstaubung und/oder Gasreinigung in die Exportgasleitung. In einer bevorzugten Variante der erfindungsgemäßen Vorrichtung mündet die Rückführleitung vor der Vorrichtung zur Entstaubung und/oder Gasreinigung in die Exportgasleitung. Die Ausdrücke vor und nach sind in diesem Zusammenhang in Bezug auf die Gasflussrichtung des Exportgases zu interpretieren.

Die Entstaubung des Exportgases mittels der Vorrichtung zur Entstaubung und/oder Gasreinigung stellt sicher, dass nachfolgende Komponenten, wie beispielsweise der Exportgasverdichter, der Prozessgaskühler, die CO₂ -Eliminierungsvorrichtung und die Reduktionsgasheizvorrichtung vor einer Beschädigung durch mit dem Exportgas mittransportierten festen Komponenten, wie beispielsweise Staubpartikel, geschützt werden.

Durch die Zufuhr des hot-Recyclegases zum Exportgas vor dessen Entstaubung in der Vorrichtung zur Entstaubung und/oder Gasreinigung tritt das das hot-Recyclegas umfassende Exportgas bereits in einem überhitzten Zustand in die Vorrichtung zur Entstaubung und/oder Gasreinigung ein. Dadurch wird vermieden, dass es in der Vorrichtung zur Entstaubung und/oder Gasreinigung zu Naß/Trockenübergängen beziehungsweise durch Kondensation/Sublimation von polyaromatischen Kohlenwasserstoffen, welche gegebenenfalls im Exportgas vorhanden sind, zu Anpackungen in der Vorrichtung zur Entstaubung und/oder Gasreinigung kommt.

### Kurze Beschreibung der Zeichnungen

In der Folge wird die Erfindung anhand von beispielhaften und schematischen Figuren näher erläutert.
F IG 1 zeigt beispielhaft und schematisch ein erfindungsgemä-βes Verfahren und eine erfindungsgemäße Vorrichtung.
F IG 2 zeigt beispielhaft und schematisch eine spezielle Ausführungsform des erfindungsgemäßen Verfahrens und der erfindungsgemäßen Vorrichtung.
F IG 3 zeigt beispielhaft und schematisch eine weitere spezielle Ausführungsform des erfindungsgemäßen Verfahrens und der erfindungsgemäßen Vorrichtung.
F IG 4 zeigt beispielhaft und schematisch ein erfindungsgemä-βes Verfahren und eine erfindungsgemäße Vorrichtung mit einem Reduktionsaggregat zur Reduktion von Metalloxiden.

### Beschreibung der Ausführungsformen

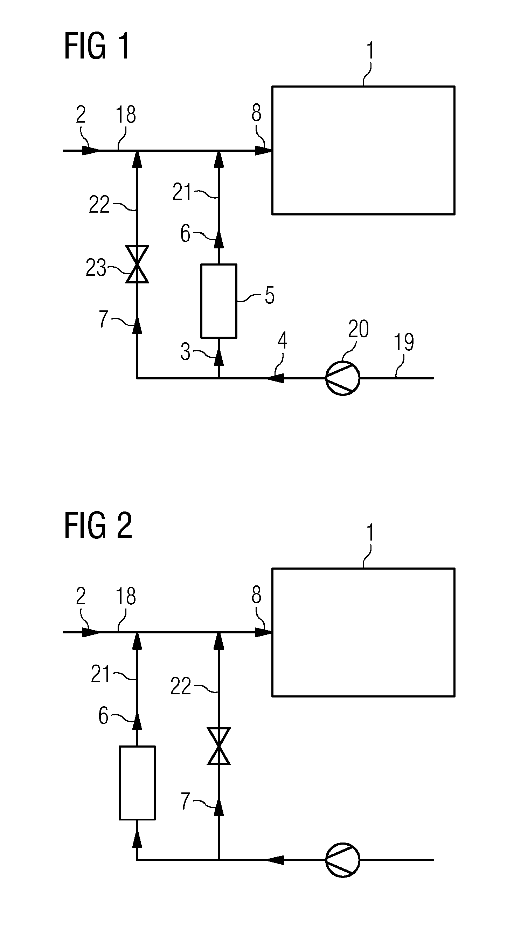

FIG 1 zeigt beispielhaft und schematisch ein erfindungsgemä-βes Verfahren und eine erfindungsgemäße Vorrichtung, bei dem zum Ausgleich von Mengenschwankungen bei gleichzeitiger Erhöhung der Temperatur eines in einem Reduktionsprozess 1 genutzten Exportgases 2 eine Kühlung einer ersten Teilmenge 3 eines vorzugsweise im Wesentlichen gleich wie das Exportgas 2 zusammengesetzten Recyclegases 4 in zumindest einem Recyclegaskühler 5 zu einem cold-Recyclegas 6 erfolgt. Das cold-Recyclegas 6 wird dem Exportgas 2 mittels einer cold-Recyclegasleitung 21 druckgeregelt und/oder mengengeregelt zugeführt, um Mengenschwankungen des Exportgases 2 auszugleichen. Die cold-Recyclegase 6 hat im Wesentlichen die gleiche Temperatur wie das Exportgas 2. Dem Exportgas 2 wird zusätzlich eine zweite Teilmenge des Recyclegases 4 mittels einer hot-Recyclegasleitung 22 druckgeregelt und/oder mengengeregelt als hot-Recyclegas 7 mit einer höheren Temperatur als das cold-Recyclegas 6 zugeführt. Die cold-Recyclegasleitung 21 und die hot-Recyclegasleitung 22 entspringen dabei einer Recyclegasleitung 19, in der eine erste Druckregelvorrichtung und/oder eine erste Mengenregelvorrichtung 20 angeordnet ist. Vorzugsweise ist die erste Druckregelvorrichtung und/oder die erste Mengenregelvorrichtung 20 ein Recyclegasverdichter. Das Exportgas 2 umfasst nun das hot-Recyclegas 7 und das cold-Recyclegas 6 und wird als Exportgasmischung 8 mittels einer Exportgasleitung 18 in den Reduktionsprozess 1 eingebracht. Die Temperatur der Exportgasmischung 8 ist höher als die Temperatur des Exportgases 2. Die Druckregelung und/oder Mengenregelung des cold-Recyclegases 6 erfolgt mittels der ersten Druckregelvorrichtung und/oder der ersten Mengenregelvorrichtung 20. Die Druckregelung und/oder die Mengenregelung des hot-Recyclegases 7 erfolgt mittels einer zweiten Druckregelvorrichtung und/oder einer zweiten Mengenregelvorrichtung 23, welche in der hot-Recyclegasleitung 22 angeordnet ist. Die Pfeile in FIG 1 deuten die Flussrichtungen der entsprechenden Gase an. In der in FIG 1 beschriebenen Ausführungsform mündet die hot-Recyclegasleitung 22 - in Gasflussrichtung des Exportgases 2 gesehen - vor der cold-Recyclegasleitung 21 in die Exportgasleitung 18. Zuerst wird dem Exportgas 2 das hot-Recyclegas 7 zugeführt, anschließend wird dem das hot-Recyclegas 7 enthaltende Exportgas 2 das cold-Recyclegas 6 zugeführt, wonach die das hot-Recyclegas 7 und das cold-Recyclegas 6 enthaltende Exportgasmischung 8 im Reduktionsprozess 1 genutzt wird.

FIG 2 zeigt beispielhaft und schematisch eine spezielle Ausführungsform des erfindungsgemäßen Verfahrens und der erfindungsgemäßen Vorrichtung. Die Pfeile deuten hier ebenfalls, so wie in FIG 1, die Flussrichtungen der entsprechenden Gase an. Der Unterschied zu dem in FIG 1 dargestellten Verfahren besteht darin, dass die hot-Recyclegasleitung 22 - in Gasflussrichtung des Exportgases 2 gesehen - nach der cold-Recyclegasleitung 21 in die Exportgasleitung 18 mündet. Zuerst wird dem Exportgas 2 das cold-Recyclegas 6 zugeführt, anschließend wird dem das cold-Recyclegas 6 enthaltenden Exportgas 2 das hot-Recyclegas 7 zugeführt, wonach die das hot-Recyclegas 7 und das cold-Recyclegas 6 enthaltende Exportgasmischung 8 im Reduktionsprozess 1 genutzt wird.

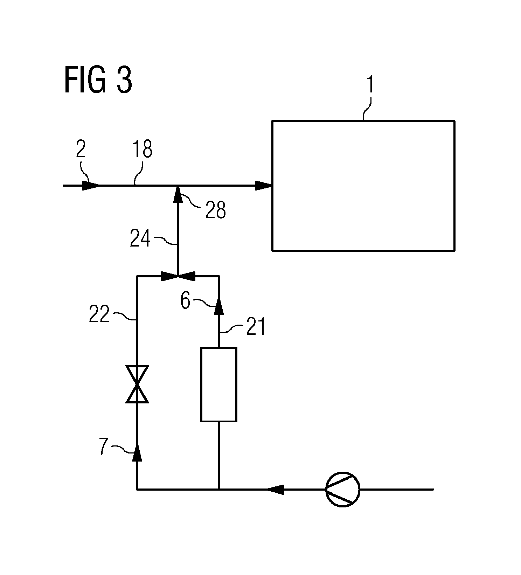

In der FIG 3 ist beispielhaft und schematisch eine weitere spezielle Ausführungsform des erfindungsgemäßen Verfahrens und der erfindungsgemäßen Vorrichtung dargestellt. Der Unterschied zu den in den FIG 1 und FIG 2 dargestellten Verfahren besteht darin, dass das cold-Recyclegas 6 und das hot-Recyclegas 7 vor deren Zufuhr zum Exportgas 2 zu einer Mischung 28 gemischt werden. Danach erfolgt die Zufuhr der Mischung 28 zum Exportgas 2. Die cold-Recyclegasleitung 21 und die hot-Recyclegasleitung 22 werden dabei in eine Rückführleitung 24 zusammengeführt, welche in die Exportgasleitung 18 mündet. Das Exportgas 2 enthält nach der Zufuhr der Mischung 28 zum Exportgas 2 sowohl das cold-Recyclegas 6 als auch das hot-Recyclegas 7.

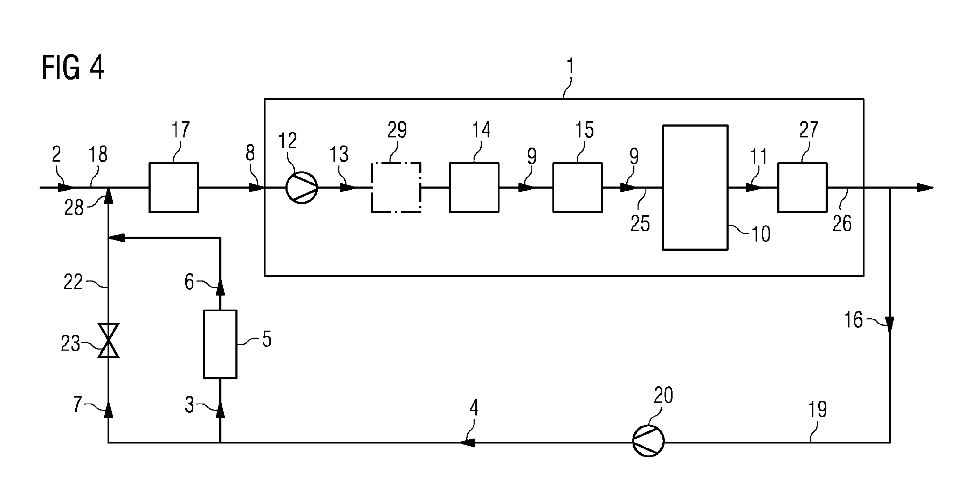

FIG 4 zeigt beispielhaft und schematisch ein erfindungsgemä-βes Verfahren und eine erfindungsgemäße Vorrichtung mit einem Reduktionsaggregat 10 zur Reduktion von Metalloxiden. Dabei wird das aus der Exportgasmischung 8 gewonnene Reduktionsgas 9 mittels einer Reduktionsgasleitung 25 in das Reduktionsaggregat 10 zur Reduktion von Metalloxiden eingebracht. Das Reduktionsgas 9 wird nach zumindest teilweiser Umwandlung bei der Reduktion der Metalloxide als Topgas 11 mittels einer Topgasleitung 26 aus dem Reduktionsaggregat 10 abgezogen. Die Gewinnung des Reduktionsgases 9 erfolgt durch Verdichtung der mittels der Exportgasleitung 18 in den Reduktionsprozess 1 eingebrachten Exportgasmischung 8 in zumindest einem Exportgasverdichter 12 zu einem Prozessgas 13. Das Prozessgas 13 wird gegebenenfalls einer Kühlung in einem Prozessgaskühler 29 unterzogen, bevor es in eine CO₂-Eliminierungsvorrichtung 14 zur Gewinnung des Reduktionsgases 9 eingebracht wird. Anschließend erfolgt eine Aufheizung des Reduktionsgases 9 in einer Reduktionsgasheizvorrichtung 15. Eine in einer Einrichtung 27 zur Entstaubung und/oder Kühlung von Topgas 11 von Staub befreite und/oder gekühlte erste Teilmenge 16 des Topgases 11 wird mittels der Recyclegasleitung 19 der als Recyclegasverdichter ausgeführten ersten Druckregelvorrichtung und/oder ersten Mengenregelvorrichtung 20 zugeführt und in dieser zu dem Recyclegas 4 verdichtet. Danach erfolgt die Kühlung der ersten Teilmenge 3 des Recyclegases 4 im Recyclegaskühler 5 zu dem cold-Recyclegas 6. Dem Exportgas 2 wird das cold-Recyclegas 6 zusammen mit dem hot-Recyclegas 7 als Mischung 28 mittels einer Rückführleitung 24, in welche die cold-Recyclegasleitung 21 und die hot-Recyclegasleitung 22 zusammengeführt werden, zugeführt. Die Druckregelung und/oder Mengenregelung des hot-Recyclegases 7 erfolgt mittels der zweiten Druckregelvorrichtung und/oder der zweiten Mengenregelvorrichtung 23.

Das Exportgas 2 wird vor seiner Nutzung im Reduktionsprozess 1 einer Entstaubung und/oder einer Gasreinigung in einer Vorrichtung 17 zur Entstaubung und/oder Gasreinigung unterzogen. Die Pfeile in FIG 4 deuten die Flussrichtungen der entsprechenden Gase an. Dem Exportgas 2 wird sowohl das hot-Recyclegas 7 als auch das cold-Recyclegas 6 vor der Vorrichtung 17 zur Entstaubung und/oder Gasreinigung zugeführt.

Dadurch wird erreicht, dass die Temperatur der Exportgasmischung 8 höher ist, als die Temperatur des Exportgases 2 vor der Zufuhr des cold-Recyclegases 6 und des hot-Recyclegases 7. Durch die Zufuhr des hot-Recyclegases 7 zum Exportgas 2 wird die fühlbare Energie des hot-Recyclegases 7 zur Temperaturerhöhung des Exportgases 2 genutzt. Dadurch wird die Temperatur des Exportgases 2 beziehungsweise der Exportgasmischung 8 derart eingestellt, dass sie höher ist als ihr Taupunkt beziehungsweise ihre Taupunkttemperatur. Diesen Vorgang nennt man Überhitzung des Exportgases 2 beziehungsweise der Exportgasmischung 8. Eine vorteilhafte Wirkung dieser Überhitzung besteht darin, dass es nicht durch Taupunktunterschreitung der Exportgasmischung 8 zu Nass/Trockenübergängen durch Kondensation/Verdampfung von Wasser bzw. Kondensation/Sublimation von polyaromatischen Kohlenwasserstoffen im Zusammenhang mit Staubpartikeln, welche gegebenenfalls im Exportgas 2 beziehungsweise in der Exportgasmischung 8 und/oder im Recyclegas 4 vorhanden sind, zu Anpackungen an Eintrittsleitapparaten und/oder Laufrädern des Exportgasverdichters 12 kommen kann. Zusätzlich wird durch die erfindungsgemäßen Maßnahmen die Gefahr von Spannungsrisskorrosionen an den Laufrädern des Exportgasverdichters 12 minimiert.

Obwohl die Erfindung im Detail durch die bevorzugten Ausführungsbeispiele näher illustriert und beschrieben wurde, so ist die Erfindung nicht durch das offenbarte Beispiel eingeschränkt und andere Variationen können vom Fachmann hieraus abgeleitet werden, ohne den Schutzumfang der Erfindung zu verlassen.

### Liste der Bezugszeichen

- 1: Reduktionsprozess
- 2: Exportgas
- 3: erste Teilmenge des Recyclegases
- 4: Recyclegas
- 5: Recyclegaskühler
- 6: cold-Recyclegas
- 7: hot-Recyclegas
- 8: Exportgasmischung
- 9: Reduktionsgas
- 10: Reduktionsaggregat
- 11: Topgas
- 12: Exportgasverdichter
- 13: Prozessgas
- 14: CO₂ - Eliminierungsvorrichtung
- 15: Reduktionsgasheizvorrichtung
- 16: erste Teilmenge des Topgases
- 17: Vorrichtung zur Entstaubung und/oder Gasreinigung
- 18: Exportgasleitung
- 19: Recyclegasleitung
- 20: erste Druckregelvorrichtung und/oder erste Mengenregelvorrichtung
- 21: cold-Recyclegasleitung
- 22: hot-Recyclegasleitung
- 23: zweite Druckregelvorrichtung und/oder zweite Mengenregelvorrichtung
- 24: Rückführleitung
- 25: Reduktionsgasleitung
- 26: Topgasleitung
- 27: Einrichtung zur Entstaubung und/oder Kühlung von Topgas
- 28: Mischung
- 29: Prozessgaskühler

## Patentansprüche

1. Verfahren zum Ausgleich von Mengenschwankungen bei gleichzeitiger Erhöhung der Temperatur eines in einem Reduktionsprozess (1) genutzten Exportgases (2), umfassend die Verfahrensschritte
● Kühlung einer ersten Teilmenge (3) eines Recyclegases (4) in zumindest einem Recyclegaskühler (5) zu einem cold-Recyclegas (6),
● druckgeregelte und/oder mengengeregelte Zufuhr des cold-Recyclegases (6) zum Exportgas (2), um Mengenschwankungen des Exportgases (2) auszugleichen,
**dadurch gekennzeichnet, dass**
dem Exportgas (2) druckgeregelt und/oder mengengeregelt eine zweite Teilmenge des Recyclegases (4) als hot-Recyclegas (7) mit einer höheren Temperatur als das cold-Recyclegas (6) zugeführt wird, wonach eine das cold-Recyclegas (6) und das hot-Recyclegas (7) umfassende Exportgasmischung (8) in den Reduktionsprozess (1) eingebracht wird und wobei die Temperatur der Exportgasmischung (8) höher ist als die Temperatur des Exportgases (2).

2. Verfahren nach Anspruch 1, **dadurch gekennzeichnet, dass** das cold-Recyclegas (6) im Wesentlichen die gleiche Temperatur wie das Exportgas (2) aufweist.

3. Verfahren nach einem der Ansprüche 1 oder 2, **dadurch gekennzeichnet, dass** ein aus der Exportgasmischung (8) gewonnenes Reduktionsgas (9) in ein Reduktionsaggregat (10) zur Reduktion von Metalloxiden eingebracht wird, dass das Reduktionsgas (9) nach zumindest teilweiser Reduktion der Metalloxide als Topgas (11) aus dem Reduktionsaggregat (10) abgezogen wird und dass die Gewinnung des Reduktionsgases (9) die Verfharensschritte
● Verdichtung der Exportgasmischung (8) in zumindest einem Exportgasverdichter (12) zu einem Prozessgas (13),
● gegebenenfalls Kühlung des Prozessgases (13) in einem Prozessgaskühler (29) und Eliminierung von CO₂ und/oder H₂O aus dem Prozessgas (13) in einer CO₂-Eliminierungsvorrichtung (14) unter Gewinnung des Reduktionsgases (9) und
● Aufheizung des Reduktionsgases (9) in einer Heizvorrichtung (15)
umfasst, wobei eine vorzugsweise von Staub befreite und/oder vorzugsweise gekühlte erste Teilmenge (16) des Topgases (11), gegebenenfalls nach einer Verdichtung, als das Recyclegas (4) verwendet wird.

4. Verfahren nach einem der vorangegangenen Ansprüche, **dadurch gekennzeichnet, dass** die Untergrenze der Temperatur des hot-Recyclegases (7) 80°C, vorzugsweise 100°C und dass die Obergrenze der Temperatur des hot-Recyclegases (7) 180°C, vorzugsweise 150°C beträgt.

5. Verfahren nach einem der vorangegangenen Ansprüche, **dadurch gekennzeichnet, dass** das Exportgas (2) Tiegelgas aus dem Gasnetz eines Stahlwerks umfasst und/oder aus einer Anlage zur Roheisenherstellung und/oder aus einer Kohlevergasungsanlage und/oder aus einer Kokerei stammt.

6. Verfahren nach einem der vorangegangenen Ansprüche, **dadurch gekennzeichnet, dass** das Exportgas (2) vor seiner Nutzung im Reduktionsprozess (1) einer Entstaubung und/oder einer Gasreinigung in einer Vorrichtung (17) zur Entstaubung und/oder Gasreinigung unterzogen wird, wobei dem Exportgas (2) das hot-Recyclegas (7) und das cold-Recyclegas (6) vor der Entstaubung und/oder Gasreinigung zugeführt wird.

7. Verfahren nach einem der vorangegangenen Ansprüche, **dadurch gekennzeichnet, dass** die Temperatur der Exportgasmischung (8) maximal um 50°C, vorzugsweise zwischen 2°C und 15°C, höher ist als die Temperatur des Exportgases (2) vor der Zufuhr des cold-Recyclegases (6) und des hot-Recyclegases (7).

8. Verfahren nach einem der vorangegangenen Ansprüche, **dadurch gekennzeichnet, dass** die Temperatur der Exportgasmischung (8) durch die Menge des der Exportgasmischung (8) zugeführten hot-Recyclegases (7) auf einen bestimmten Wert geregelt wird.

9. Vorrichtung zur Durchführung des Verfahrens nach einem der Ansprüche 1 bis 8, **dadurch gekennzeichnet, dass** sie umfasst
● eine Exportgasleitung (18) zum Einbringen einer Exportgasmischung (8) in einen Reduktionsprozess (1),
● eine Recyclegasleitung (19) mit einer in der Recyclegasleitung (19) vorzugsweise als Recyclegasverdichter ausgebildeten ersten Druckregelvorrichtung und/oder ersten Mengenregelvorrichtung (20),
● eine aus der Recyclegasleitung (19) entspringende cold-Recyclegasleitung (21) mit einem in der cold-Recyclegasleitung (21) angeordneten Recyclegaskühler (5),
**dadurch gekennzeichnet, dass**
eine aus der Recyclegasleitung (19) entspringende hot-Recyclegasleitung (22) mit einer in der hot-Recyclegasleitung (22) angeordneten zweiten Druckregelvorrichtung und/oder zweiten Mengenregelvorrichtung (23) vorhanden ist, wobei die cold-Recyclegasleitung (21) und die hot-Recyclegasleitung (22) in die Exportgasleitung (18) münden oder die cold-Recyclegasleitung (21) und die hot-Recyclegasleitung (22) in eine Rückführleitung (24) zusammengeführt werden, welche in die Exportgasleitung (18) mündet.

10. Vorrichtung nach Anspruch 9, **dadurch gekennzeichnet, dass** sie weiter umfasst
● eine in ein Reduktionsaggregat (10) mündende Reduktionsgasleitung (25) zur Zufuhr von Reduktionsgas (9) in das Reduktionsaggregat (10),
● eine aus dem Reduktionsaggregat (10) entspringende Topgasleitung (26) mit einer in der Topgasleitung (26) angeordneten Einrichtung (27) zur Entstaubung und/oder Kühlung von Topgas (11), wobei die Recyclegasleitung (19) nach der Einrichtung (27) zur Entstaubung und/oder Kühlung von der Topgasleitung (26) abzweigt, und wobei die cold-Recyclegasleitung (21) und die hot-Recyclegasleitung (22) nach der ersten Druckregelvorrichtung und/oder der ersten Mengenregelvorrichtung (20) aus der Recyclegasleitung (19) entspringen,
● zumindest einen in der Exportgasleitung (18) angeordneten Exportgasverdichter (12),
● eine dem Exportgasverdichter (12) nachgeordnete CO₂-Eliminierungsvorrichtung (14) und
● eine der CO₂-Eliminierungsvorrichtung (14) nachgeordnete Reduktionsgasheizvorrichtung (15) aus der die Reduktionsgasleitung (25) entspringt.

11. Vorrichtung nach einem der Ansprüche 9 oder 10, **dadurch gekennzeichnet, dass** die Exportgasleitung (18) aus einem Gasnetz eines Stahlwerks und/oder aus einer Anlage zur Roheisenherstellung und/oder aus einer Kohlevergasungsanlage und/oder aus einer Kokerei entspringt.

12. Vorrichtung nach einem der Ansprüche 9 bis 11, **dadurch gekennzeichnet, dass** in der Exportgasleitung (18) eine Vorrichtung (17) zur Entstaubung und/oder Gasreinigung angeordnet ist, wobei die hot-Recyclegasleitung (22) und die cold-Recyclegasleitung (21) oder die Rückführleitung (24) vor der Vorrichtung (17) zur Entstaubung und/oder Gasreinigung in die Exportgasleitung (18) münden.
